# EUROPEAN PATENT APPLICATION

(11) **EP 1 096 647 A2**
(43) Date of publication of application: **02.05.2001**
(21) Application number: 00203406.4
(22) Date of filing: 02.10.2000
(51) Int. Cl.: H02K 11/04, H02K 9/19

(54) **Electric motor or generator including fluid cooled electronic components**

(30) Priority: 28.10.1999 GB 9925395
(71) Applicant: Delphi Technologies, Inc., Troy, MI 48007 (US)
(72) Inventor: Thevenin, Marc J., 6810 Prouvy (BE); Pierron, Gabriel C., 57650 Fontoy (FR); Kneppers, Gerard J., 7762 Bissen (LU)
(74) Representative: Denton, Michael John

(57) **Abstract**

An electric motor or generator (10) comprising a stator (12); a rotor (14) rotatably mounted inside the stator; a housing (16) surrounding the stator and the rotor and having an end wall (18); electric components (20) mounted on the end wall of the housing; a cover member (24) of metallic material covering the electronic components and secured to the end wall; and a coolant pipe (28) attached to the cover member and having a fluid inlet (30) and a fluid outlet (32) for the passage of cooling fluid through the pipe. Provides cooling for the cover member and the electronic components.

## Description

### Technical Field

The present invention relates to an electric motor or generator in which electronic components are mounted on the housing for the electric motor or generator.

### Background of the Invention

An electric motor or generator comprises a stator winding, a rotor winding rotatably mounted inside the stator, and a housing for supporting and covering the stator and the rotor. It is known to mount electronic components (for example, components used in the control of the operation of the motor or generator) on one end of the housing. In general, the electronic components are covered by a plastics cover which is secured to the housing. In certain environments, for example, next to a catalytic converter in the engine compartment of a motor vehicle, there is a risk that the plastics cover and the electronic components may be affected by high temperatures.

### Summary of the Invention

It is an object of the present invention to overcome the above mentioned problem.

An electric motor or generator in accordance with the present invention comprises a stator; a rotor rotatably mounted inside the stator; a housing surrounding the stator and the rotor and having an end wall; electric components mounted on the end wall of the housing; a cover member of metallic material covering the electronic components and secured to the end wall; and a coolant pipe attached to the cover member and having a fluid inlet and a fluid outlet for the passage of cooling fluid through the pipe.

The use of a metallic cover member (rather than a plastics cover) with a coolant pipe for the passage of cooling fluid overcomes the problem of excessively high temperatures affecting the electronic components.

### Brief Description of the Drawings

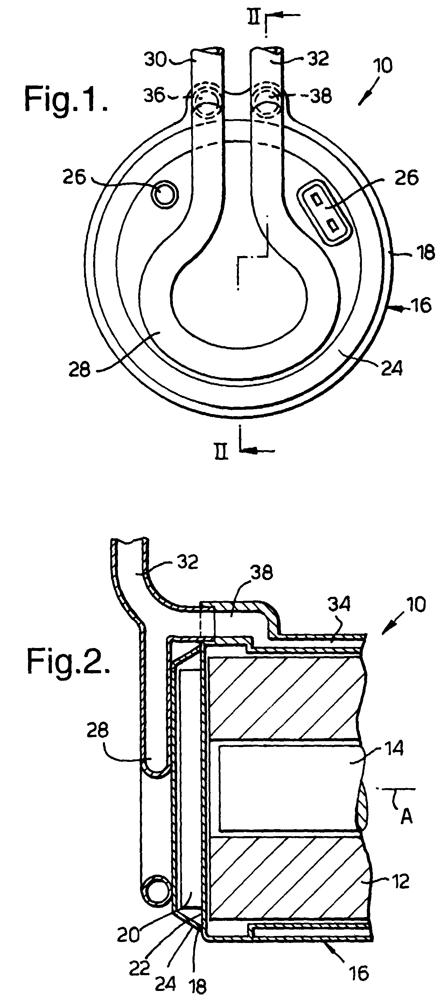

The present invention will now be described, by way of example, with reference to the accompanying drawings, in which:-
Figure 1 is an end view of an electric motor or generator in accordance with the present invention; and
Figure 2 is a cross-sectional view, partly schematic, on the line II-II of Figure 1.

### Description of the Preferred Embodiment

Referring to the drawings, the electric motor or generator 10 in accordance with the present invention has particular application in a motor vehicle, and includes a stator 12 and a rotor 14, the rotor being rotatable about an axis A inside the stator. The stator 12 and rotor 14 are positioned inside a housing 16 having an end wall 18. Electronic components 20 are mounted on the outer surface 22 of the end wall 18 and are generally used to control the operation of the electric motor or generator 10. A metallic cover 24 is positioned over the electronic components 20 and is secured to the end wall 18 of the housing 16 in any suitable manner. Electrical connectors 26 are mounted on the cover 24 for providing power and/or control signals to and from the stator 12, rotor 14, and the electronic components 20.

A coolant pipe 28 is attached to the cover 24 and has a fluid inlet 30 and a fluid outlet 32. The pipe 28 may be separately formed and secured to the cover 24 in any suitable manner (for example, by welding). Alternatively, the pipe 28 and the cover 24 may be integrally formed in one piece. The housing 16 may include a channel 34 for the passage of cooling fluid, the channel 34 having an inlet 36 and an outlet 38. In the latter case, the fluid inlet 30 for the pipe 28 is preferably connected with the inlet 36 to the channel 34, and the fluid outlet 32 for the pipe is preferably connected with the outlet 36 from the channel. The fluid inlet 30 and fluid outlet 32 of the pipe 28 are connected to any suitable source of cooling fluid, such as the cooling fluid for the engine of a motor vehicle.

In the present invention, compared to the known prior art, the metallic cover 24 is used to replace the previously known plastics cover, and a coolant pipe 28 is attached to the cover to provide fluid cooling for the cover and for the electronic components 20. The present invention has particular application when positioned in the engine compartment of a motor vehicle close to a source of high temperature (for example, a catalytic converter).

## Claims

1. An electric motor or generator (10) comprising a stator (12); a rotor (14) rotatably mounted inside the stator; a housing (16) surrounding the stator and the rotor and having an end wall (18); electric components (20) mounted on the end wall of the housing; a cover member (24) of metallic material covering the electronic components and secured to the end wall; and a coolant pipe (28) attached to the cover member and having a fluid inlet (30) and a fluid outlet (32) for the passage of cooling fluid through the pipe.

2. An electric motor or generator as claimed in Claim 1, wherein the pipe (28) is separately formed and secured to the cover member (24).

3. An electric motor or generator as claimed in Claim 1 or Claim 2, wherein the housing (16) has a channel (34) therein having an inlet (36) and an outlet (38) for the passage of cooling fluid through the channel.

4. An electric motor or generator as claimed in Claim 3, wherein the fluid inlet (30) for the pipe (28) is fluidly connected with the inlet (36) of the channel (34), and wherein the fluid outlet (32) of the pipe is fluidly connected with the outlet (38) of the channel.
